# EUROPÄISCHE PATENTANMELDUNG

(11) **EP 4 796 287 A1**
(43) Veröffentlichungstag der Anmeldung: **26.08.2026**
(21) Anmeldenummer: 25159394.3
(22) Anmeldetag: 21.02.2025
(51) Int. Cl.: B29C 48/80, B29C 48/92, G06N 3/02, G06F 113/22, G06F 119/08

(54) **TEMPER-VORRICHTUNG UND TEMPER-VERFAHREN ZUM TEMPERN EINES TEMPER-GUTS MIT HILFE EINES TEMPER-MODELLS SOWIE MASCHINEN-LERN-VERFAHREN UND COMPUTER-PROGRAMM-PRODUKT ZUM BILDEN DES TEMPER-MODELLS**

(71) Anmelder: Siemens Aktiengesellschaft, 80333 München (DE)
(72) Erfinder: Geier, Ingo, 90556 Cadolzburg (DE); Müller, Roger, 91054 Erlangen (DE); Tokic, Michel, 88069 Tettnang (DE); von Beuningen, Anja, 99085 Erfurt (DE)
(74) Vertreter: Siemens Patent Attorneys

(57) **Zusammenfassung**

Temper-Vorrichtung und Temper-Verfahren zum Tempern eines Temper-Guts mit Hilfe eines Temper-Modells sowie Maschinen-Lern-Verfahren und Computer-Programm-Produkt zum Bilden des Temper-Modells

Die Erfindung betrifft eine Temper-Vorrichtung zum Tempern eines Temper-Guts, aufweisend
- mindestens eine Zustands-Erfassungs-Einheit zum Erfassen eines Ist-Zustands des Temper-Guts und
- mindestens eine Steuer-Einheit mit mindestens einem Steuer-Parameter zum Steuern des Temperns des Temper-Guts, wobei
- die Steuer-Einheit dazu ausgestaltet ist, dass auf der Grundlage des Ist-Zustands des Temper-Guts mit Hilfe eines Maschinen-Lern-Verfahrens ein Temper-Modell mit dem Steuer-Parameter gebildet und
- das Temper-Modell mit dem Steuer-Parameter zum Steuern des Temperns des Temper-Guts verwendet wird.

Zusätzlich zur Temper-Vorrichtung wird auch ein Temper-Verfahren zum Tempern eines Temper-Guts mit Hilfe der Temper-Vorrichtung angegeben, wobei folgende Verfahrensschritte durchgeführt werden:
a) Erfassen der Ist-Zustands-Größe des Temper-Guts mit Hilfe der Zustands-Erfassungs-Einheit,
b) Bilden eines Temper-Modells mit dem Steuer-Parameter auf der Grundlage der erfassten Ist-Zustands-Größe und
c) Steuern des Temperns des Temper-Guts mit Hilfe des Temper-Modells mit dem Steuer-Parameter, wobei zum Bilden des Temper-Modells folgende weiteren Verfahrensschritte durchgeführt werden:
ba) Bereitstellen eines Ausgangs-Modells des Temper-Modells und
bb) Anwenden eines Maschinen-Lern-Verfahrens auf das Ausgangs-Modell unter Berücksichtigung der erfassten Zustands-Größe.

Neben der Temper-Vorrichtung und dem Temper-Verfahren werden ein Maschinen-Lern-Verfahren zum Bilden des für die Temper-Vorrichtung und/oder für das Temper-Verfahren verwendeten Temper-Modells und ein Computer-Programm-Produkt zum Durchführen des Maschinen-Lern-Verfahrens angegeben.

Anwendung findet die Erfindung in der Verarbeitung eines thermoplastischen Kunststoffs.

## Beschreibung

Die Erfindung betrifft eine Temper-Vorrichtung und ein Temper-Verfahren zum Tempern eines Temper-Guts mit Hilfe eines Temper-Modells. Daneben werden ein Maschinen-Lern-Verfahren und ein Computer-Programm-Produkt zum Bilden des Temper-Modells angegeben.

Das Temper-Gut kann ein beliebiges festes und/oder flüssiges Material aufweisen. Unter Tempern des Temper-Guts wird eine thermische Behandlung (Temperieren) des Materials verstanden. Durch die Thermische Behandlung wird dem Material thermische Energie zugeführt. Durch die thermische Behandlung kann dem Temper-Gut aber auch thermische Energie entzogen werden.

Das Temper-Gut ist beispielsweise ein Kunststoff-Granulat aus thermoplastischem Kunststoff. Während oder nach dem Tempern des Kunststoff-Granulats wird ein Kunststoff-Form-Gebungs-Verfahren durchgeführt. Das Kunststoff-Form-Gebungs-Verfahren ist beispielsweise ein Extrudieren (Extrusion), bei dem der thermoplastische Kunststoff erhitzt und unter Druck kontinuierlich durch eine Öffnung gepresst wird.

Der gesamte Prozess (Tempern und Extrudieren) soll dabei so gesteuert bzw. geregelt werden, dass ein möglichst gleichförmiges Extrudat (Extrudier-Erzeugnis) resultiert. Einen großen Einfluss darauf hat dabei die Temperatur des Kunststoffs während des gesamten Prozesses. Um die Temperatur des Kunststoffs zu regeln, wird beispielsweise ein Heiz-Band um einen Zylinder eines Kolbens eines Extruders (Extrudier-Vorrichtung, beispielsweise Kolben- oder Schnecken-Extruder) angeordnet. Über das Heiz-Band wird die Temperatur des thermoplastischen Kunststoffs gesteuert. Zur Steuerung bzw. zur Regelung des Temperns ist dem Heiz-Band ein Temperatur-Regler zugeordnet.

Eine Haupt-Wärme-Menge, die das Kunststoff-Granulat während des gesamten Prozesses aufnimmt, kommt dabei nicht über das Heiz-Band. Die Haupt-Wärme-Menge entsteht durch Reibung und Scherung des Kunststoff-Granulats im Zylinder.

Über das Heiz-Band wird die Temperatur des Kunststoff-Granulats bzw. die Temperatur des durch Eintrag thermischer Energie in das Kunststoff-Granulat plastifizierten Kunststoffs so eingestellt, dass eine möglichst homogene Soll-Temperatur im plastifizierten Kunststoff resultiert.

Eine Extrudier-Vorrichtung ist in der Regel mit mehreren Heiz-Bändern ausgestattet. Die Temperaturen müssen für die einzelnen Heiz-Bänder individuell eingestellt werden. Dies kann aufwändig und zeitintensiv sein.

Aufgabe der vorliegenden Erfindung ist es, eine Möglichkeit anzugeben, wie das Tempern eines Temper-Guts, beispielsweise durch das Einstellen der Temperatur eines oben beschriebenen Heiz-Bandes, einfach und flexibel gesteuert werden kann.

Zur Lösung der Aufgabe wird eine Temper-Vorrichtung zum Tempern eines Temper-Guts, aufweisend
- mindestens eine Zustands-Erfassungs-Einheit zum Erfassen eines Ist-Zustands des Temper-Guts und
- mindestens eine Steuer-Einheit mit mindestens einem Steuer-Parameter zum Steuern des Temperns des Temper-Guts, wobei
- die Steuer-Einheit dazu ausgestaltet ist, dass auf der Grundlage des Ist-Zustands des Temper-Guts mit Hilfe eines Maschinen-Lern-Verfahrens ein Temper-Modell mit dem Steuer-Parameter gebildet und
- das Temper-Modell zum Steuern des Temperns des Temper-Guts verwendet wird.

Zur Lösung der Aufgabe wird auch ein Temper-Verfahren zum Tempern eines Temper-Guts mit Hilfe der Temper-Vorrichtung angegeben, wobei folgende Verfahrensschritte durchgeführt werden:
a) Erfassen der Ist-Zustands-Größe des Temper-Guts mit Hilfe der Zustands-Erfassungs-Einheit,
b) Bilden eines Temper-Modells mit dem Steuer-Parameter auf der Grundlage der erfassten Ist-Zustands-Größe und
c) Steuern des Temperns des Temper-Guts mit Hilfe des Temper-Modells,
und wobei zum Bilden des Temper-Modells folgende weiteren Verfahrensschritte durchgeführt werden:
ba) Bereitstellen eines Ausgangs-Modells des Temper-Modells und
bb) Anwenden eines Maschinen-Lern-Verfahrens auf das Ausgangs-Modell unter Berücksichtigung der erfassten Zustands-Größe.

Für das Maschinen-Lern-Verfahren wird vorzugsweise ein Kl(künstliche Intelligenz)-Modell verwendet. Des Weiteren wird für das Kl-Modell insbesondere ein neuronales Netz verwendet.

Neben der Temper-Vorrichtung und dem Temper-Verfahren werden zur Lösung der Aufgabe auch ein Maschinen-Lern-Verfahren zum Bilden des Temper-Modells, das für die Temper-Vorrichtung und/oder für das Temper-Verfahren verwendet wird, und ein Computer-Programm-Produkt zum Durchführen des Maschinen-Lern-Verfahrens angegeben.

Mit der Erfindung wird ein modellbasierter Ansatz verfolgt. Dabei wird zunächst auf der Grundlage von Eingangs-Daten, zu denen Daten zum erfassten Zustand des Temper-Guts zählen, mit Hilfe eines Maschinen-Lern-Verfahrens ein Temper-Modell (Surrogat-Modell für die Temperatur-Behandlung des Temper-Guts) gebildet (und trainiert), das dann zum Steuern des Temperns des Temper-Guts verwendet wird. Dazu weist die Steuer-Einheit der Temper-Vorrichtung vorzugsweise mindestens einen Temperatur-Regler zum Regeln einer Temperatur des Temper-Guts auf. Dementsprechend wird im Hinblick auf das beschriebene Temper-Verfahren für die Steuer-Einheit ein Temperatur-Regler verwendet, der den Steuer-Parameter bildet. Mit dem Temperatur-Regler kann das Temper-Gut erwärmt oder gekühlt werden. Mit dem Maschinen-Lern-Verfahren wird der Temperatur-Regler bzw. werden Parameter des Temperatur-Reglers optimiert. Der Temperatur-Regler ist beispielsweise ein PID-Regler (proportional-integral-derivative controller). Besonders vorteilhalft ist es, wenn mehrere Temperatur-Regler verwendet werden. Die Temper-Vorrichtung weist also mehrere Temperatur-Regler auf. Diese können gleichzeitig gesteuert werden. Gegenseitige Einflüsse zwischen den Temperatur-Reglern können so mitmodelliert werden.

In einer Ausgestaltung kann der Ist-Zustand des Temper-Guts mit Hilfe mindestens einer physikalischen oder chemischen Größe beschrieben werden und die Zustands-Erfassungs-Einrichtung weist mindestens einen physikalischen oder chemischen Sensor zum Erfassen der physikalischen oder chemischen Größe auf. Insbesondere ist die physikalische Größe eine Temperatur des Temper-Guts und der physikalische Sensor weist einen Temperatur-Sensor zum Erfassen der Temperatur des Temper-Guts auf. In einer weiteren Ausgestaltung ist die physikalische Größe eine Form des Temper-Guts und der physikalische Sensor weist einen Form-Sensor zum Erfassen der Form des Temper-Guts auf. Die Form des Temper-Guts beinhaltet u.a. Abmessungen des Temper-Guts. Beispielsweise ist das Temper-Gut ein Kunststoff-Granulat. Mit dem Form-Sensor werden die Formen bzw. die Abmessungen einzelner Körner des Kunststoff-Granulats erfasst.

Für das Maschinen-Lern-Verfahren können beliebige Eingangs-Daten bzw. Eingabe-Daten verwendet werden. Vorzugsweise werden für das Maschinen-Lern-Verfahren Eingabe-Daten verwendet, die aus der Gruppe Zustands-Daten des Temper-Guts, Temper-Vorrichtungs-Daten der Temper-Vorrichtung und Umgebungs-Daten einer Umgebung der Temper-Vorrichtung ausgewählt sind. Die Temper-Vorrichtungs-Daten betreffen beispielsweise Parameter von verwendeten Temperatur-Reglern. Umgebungs-Daten der Temper-Vorrichtung beinhalten beispielsweise eine Umgebungs-Temperatur oder eine Feuchtigkeit der Umgebungs-Luft. Denkbar ist auch die Verwendung von Vergleichs-Zustands-Daten eines Vergleichs-Temper-Guts als Eingabe-Daten. Das Vergleichs-Temper-Gut ist beispielsweise ein Temper-Produkt eines vorangegangenen Temper-Verfahrens.

Von der Vielzahl möglicher Temper-Vorrichtungs-Daten sind diese vorzugsweise aus der Gruppe Real-Daten einer existierenden Temper-Vorrichtung und Simulations-Daten einer virtuellen Temper-Vorrichtung ausgewählt. Mit den Real-Daten fließen Erfahrungs-Werte zu einer bestehenden Vergleichs-Temper-Vorrichtung ein. Mit den virtuellen Daten einer virtuellen Temper-Vorrichtung werden nicht-reale Daten einer nicht-realen Temper-Vorrichtung verwendet. Die virtuelle Temper-Vorrichtung ist beispielsweise eine simulierte Temper-Vorrichtung. Die nicht-realen Daten sind Simulations-Daten, die aus einer Simulation der Temper-Vorrichtung hervorgehen.

Mit dem Verfahren kann das Tempern über einen beliebigen Zeitraum erfolgen. Vorzugsweise werden das Temper-Verfahren, die Verfahrensschritte des Temper-Verfahrens und/oder die weiteren Verfahrensschritte des Temper-Verfahrens in einer Zeit von unter 120 min und insbesondere in einer Zeit von unter 60 min durchgeführt. Dabei sind auch kurze Zeitintervalle möglich. Vorzugsweise beträgt die Zeit unter 1 s und insbesondere unter 100 ms. Dies betrifft insbesondere einzelne Verfahrensschritte, beispielsweise das Bilden des Temper-Modells oder Steuern des Temperns des Temper-Guts.

Das Temper-Verfahren kann für das Tempern verschiedenster Materialien verwendet werden. Ein solches Material ist beispielsweise anorganisches Material wie Glas, Keramik oder Metall. In diesen Fällen würde das Tempern als Sintern bezeichnet werden. Besonders vorteilhaft ist es, als Temper-Gut mindestens ein thermoplastisches Kunststoff-Edukt zu verwenden, wobei eine physikalische und/oder chemische Umwandlung des Kunststoff-Edukts in ein Kunststoff-Produkt durch das Tempern zumindest unterstützt wird. Das Kunststoff-Produkt kann dabei ein Zwischen-Produkt einer mehrstufigen Produktions-Kette zur Herstellung eines Kunststoff-EndProdukts sein. Bei Verwendung eines Kunststoff-Edukts werden für das Maschinen-Lern-Verfahren Eingabe-Daten verwendet, die aus der Gruppe Kunststoff-Edukt-Daten und/oder Kunststoff-Produkt-Daten ausgewählt sind. Die Eingabe-Daten beziehen sich auf entsprechende Eingangs-Größen.

Bei einem thermoplastischen Kunststoff kann eine Verformbarkeit des Kunststoffs über die Temperatur des Kunststoffs beeinflusst werden. Vorteilhaft ist es, das Temper-Verfahren mit einem Formgebungs-Verfahren zu kombinieren. In einer besonderen Ausgestaltung wird während und/oder nach dem chemischen und/oder physikalischen Umwandeln des Kunststoff-Edukts in das Kunststoff-Produkt mindestens ein aus der Gruppe Extrudieren, Spritzgießen und Blasformen ausgewähltes Kunststoff-Formgebungs-Verfahren angewendet.

Das eingesetzte Maschinen-Lern-Verfahren kann insbesondere für eine Sensitivitäts-Analyse erweitert werden. Dabei wird ein Einfluss der Eingangs-Daten des Maschinen-Lern-Verfahrens auf Ausgangs-Daten des Maschinen-Lern-Modells bestimmt.

Zusammenfassend sind folgende Vorteile der Erfindung mit dem Modell basierten Ansatz hervorzuheben:
- Auf Änderungen im Hinblick auf das Temper-Gut kann das Sinter-Verfahren schnell und flexibel angepasst werden.
- Es kann Material gespart werden. So wird beispielsweise kein Material (z.B. Kunststoff-Granulat) verbraucht. Damit sind viele Optimierungs-Schritte möglich, die ohne die Erfindung im Hinblick auf das Material kostenintensiv wären.
- Es wird Zeit gespart: Das Temper-Modell kann innerhalb weniger Millisekunden ausgewertet werden, so dass eine Optimierung der Steuer-Vorrichtung (z.B. des Temper-Reglers der Steuer-Vorrichtung) deutlich beschleunigt wird. Selbstverständlich benötigt das Temper-Modell auch eine Trainingszeit, die durchaus mehrere Stunden betragen kann. Die Trainingszeit des Temper-Modells ist jedoch einmalig. Das spätere Optimieren des Temper-Reglers kann in sehr kurzer Zeit erfolgen.
- Anhand des Temper-Modells kann eine Sensitivitäts-Analyse durchgeführt werden. Diese gibt einen Hinweis darauf, z.B. welchen Anteil die Eigenschaften eines Ausgangs-Materials des Temper-Guts (beispielsweise Kunststoff-Granulat) auf das Verhalten der Temper-Vorrichtung hat.
- Bei Verwendung mehrerer Temperatur-Regler, können diese gleichzeitig gesteuert werden. Das Temper-Modell betrachtet alle Temperatur-Regler auf einmal, so dass gegenseitige Einflüsse bereits mitmodelliert werden.
- Während des Trainierens des Temper-Modells im Rahmen des Bildens des Temper-Modells können unbekannte Prozess-Schwankungen durch ein kostengünstiges Nachtraining modelliert werden.

Im Folgenden wird die Erfindung anhand eines Ausführungsbeispiels und der dazugehörigen Figuren näher beschrieben. Die Figuren sind schematisch und stellen keine maßstabsgetreue Abbildung dar.

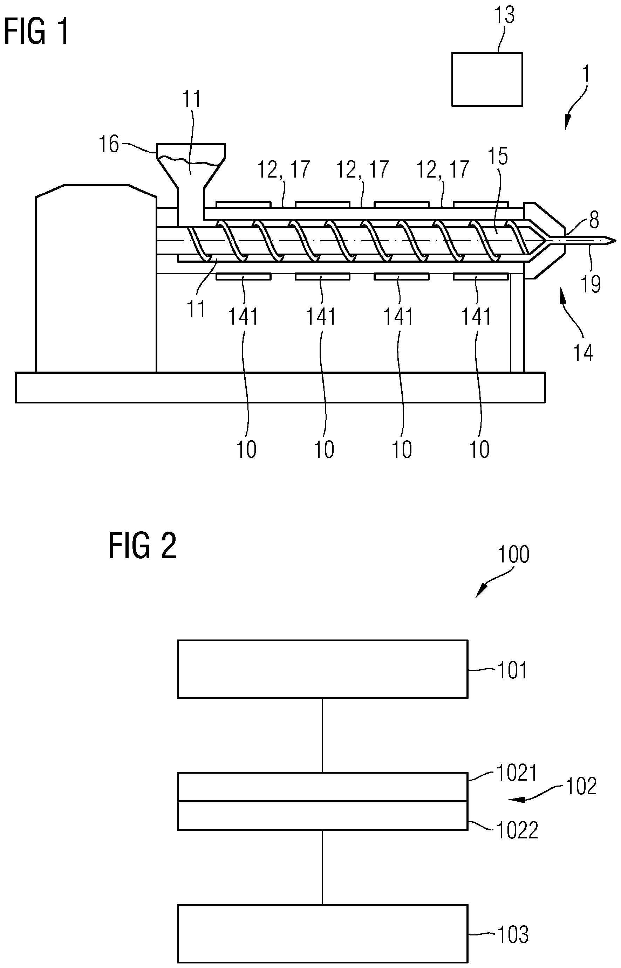

Figur 1 zeigt eine Temper-Vorrichtung.
Figur 2 zeigt ein Temper-Verfahren.
Figur 3 zeigt den Aufbau eines Temper-Modells.
Figur 4 zeigt die Ausgabe des Temper-Modells.

Gegeben ist eine Temper-Vorrichtung 1 zum Tempern eines Temper-Guts 11, aufweisend
- mindestens eine Zustands-Erfassungs-Einheit 12 zum Erfassen eines Ist-Zustands des Temper-Guts und
- mindestens eine Steuer-Einheit 13 mit mindestens einem Steuer-Parameter zum Steuern des Temperns des Temper-Guts, wobei
- die Steuer-Einheit dazu ausgestaltet ist, dass auf der Grundlage des Ist-Zustands des Temper-Guts mit Hilfe eines Maschinen-Lern-Verfahrens ein Temper-Modell mit dem Steuer-Parameter gebildet und
- das Temper-Modell zum Steuern des Temperns des Temper-Guts verwendet wird.

Mit Hilfe der Temper-Vorrichtung wird ein Temper-Verfahren 100 mit folgenden Verfahrensschritten durchgeführt:
a) Erfassen 101 der Ist-Zustands-Größe des Temper-Guts mit Hilfe der Zustands-Erfassungs-Einheit,
b) Bilden 102 eines Temper-Modells mit dem Steuer-Parameter auf der Grundlage der erfassten Ist-Zustands-Größe und
c) Steuern 103 des Temperns des Temper-Guts mit Hilfe des Temper-Modells, wobei zum Bilden des Temper-Modells folgende weitere Verfahrensschritte durchgeführt werden:
   ba) Bereitstellen 1021 eines Ausgangs-Modells des Temper-Modells und
   bb) Anwenden 1022 eines Maschinen-Lern-Verfahrens auf das Ausgangs-Modell unter Berücksichtigung der erfassten Zustands-Größe.

Gemäß dem Ausführungsbeispiel ist das Temper-Gut ein Kunststoff-Granulat eines thermoplastischen Kunststoffs. Der thermoplastische Kunststoff wird als Kunststoff-Edukt eingesetzt. Durch das Tempern wird thermische Energie in das Kunststoff-Granulat eingebracht. Dadurch erwärmt sich das Kunststoff-Granulat. Es resultiert ein plastisch verformbares Kunststoff-Produkt.

Die Temper-Vorrichtung ist Bestand-Teil einer Extrudier-Vorrichtung in Form eines Schnecken-Extruders mit einem Extruder-Zylinder 14 und einer im Extruder-Zylinder 14 angeordneten Extruder-Schnecke 15. Während bzw. nach dem Tempern des Kunststoffs wird also ein Kunststoff-Formgebungs-Verfahren durchgeführt.

Über einen Extruder-Befüll-Trichter 16 wird das Kunststoff-Granulat 11 in den Extruder-Zylinder eingefüllt. Im Extruder-Zylinder findet durch Temperatur-Erhöhung eine Plastifizierung des Kunststoffs statt. Mit Hilfe der Extruder-Schnecke wird der plastifizierte Kunststoff entlang des Extruder-Zylinders vorangetrieben. Durch eine Öffnung 18 am Ende des Extruder-Zylinders verlässt der plastifizierte Kunststoff als Extrudat 19 den Extruder-Zylinder.

Die Steuer-Einheit 13 der Temper-Vorrichtung umfasst einen PID-Regler. Als Steuer-Parameter werden P,I und D Anteile des PID-Reglers verwendet. Entlang des Extrudier-Zylinders 1 ist eine Vielzahl von Zustands-Erfassungs-Einheiten 12 in Form von Temperatur-Sensoren angeordnet.

Die Temper-Vorrichtung besteht aus mehreren Teil-Temper-Vorrichtungen (Abschnitten) 10, die entlang eines Extrudier-Zylinders 14 angeordnet sind. Entlang des Extrudier-Zylinders ist eine Vielzahl von Temperatur-Sensoren 17 zum Erfassen der Temperatur des Temper-Guts im jeweiligen Abschnitt des Extrudier-Zylinders angeordnet. Jedem der Abschnitte ist ein Heiz-Band 141 zugeordnet.

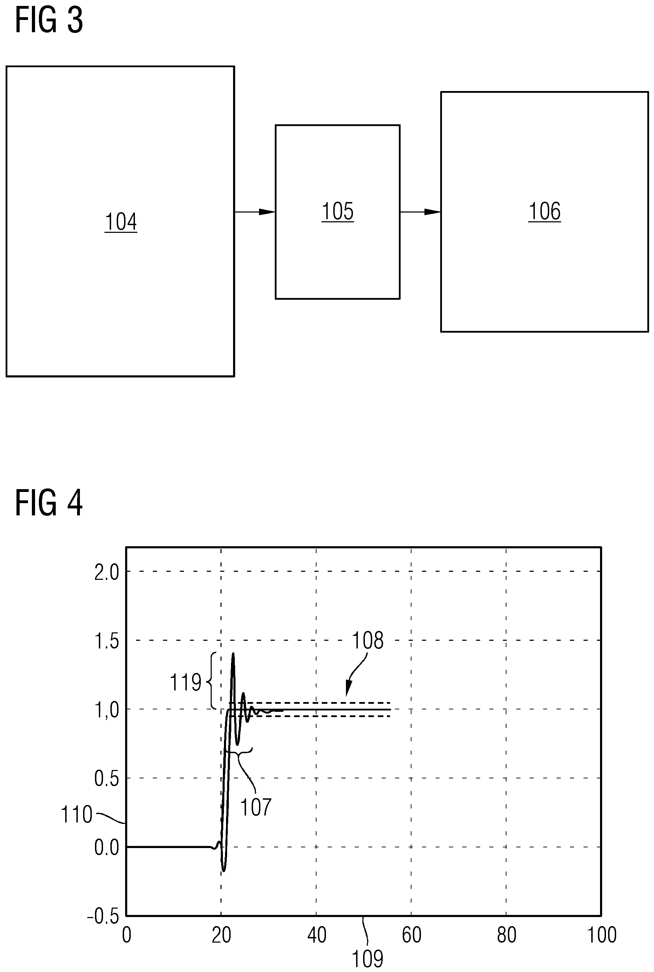

Zum Steuern des Temperns wird ein datengetriebenes Temper-Modell gebildet und trainiert (Figur 3). Zur Bildung des Temper-Modells werden Eingabe-Daten 104 zu folgenden Größen verwendet:
- Regler-Parameter des Temperatur-Reglers
- Maschinen-Daten des Schnecken-Extruders
- Eigenschaften des Kunststoff-Granulats
- Umgebungsdaten des Schnecken-Extruders

Die Maschinen-Daten betreffen beispielsweise Ist-Temperaturen und/oder-Soll-Temperaturen der Heiz-Bänder. Mithilfe eines Temper-Models mit neuronalem Netz wird das Temper-Modell trainiert. Auf die Eingabe-Daten wird ein neuronales Netz angewendet (Bezugszeichen 105). Dabei werden Ausgabe-Daten 106 des Temper-Modells generiert. Die Ausgabe-Daten umfassen u.a. Qualitäts-Daten zur Temper-Regelung. Dies ist mit Figur 4 dargestellt, bei der die Zeit 109 in s gegen eine bestimmte Regel-Größe 110 aufgetragen ist. Als Qualitätskriterium kann beispielsweise der Zeitpunkt 107 verwendet werden, bei dem ein stabiler Zustand für das Tempern erreicht ist (vgl. Figur 4). Ein stabiler Zustand ist beispielsweise dann erreicht, wenn die Regel-Größe, beispielsweise die Temperatur eines Heiz-Bandes oder die Temperatur des Temper-Guts in einem bestimmten Toleranz-Band liegt. Als Qualitäts-Kriterium kann auch eine Überschwingungsstärke (Ausmaß einer Abweichung der Ist-Temperatur des Temper-Guts von einer Soll-Temperatur des Temper-Guts) herangezogen werden.

Um das Temper-Modell antrainieren zu können, werden entsprechend viele Daten (oder Simulations-Schritte) verwendet, die eine hohe Variabilität beinhalten. Diese Daten können bei einer bestehenden Temper-Vorrichtung aus dem Real-Betrieb der Temper-Vorrichtung selbst (Real-Daten) oder aus einer Simulation der Temper-Vorrichtung (Simulations-Daten) stammen. Denkbar ist auch, Daten aus dem Betrieb einer baugleichen Temper-Vorrichtung zu verwenden.

Der zu optimierende (PID-)Regler wird anschließend nicht gegen reale Betriebs-Daten oder (teure) Simulations-Daten optimiert, sondern gegen das Temper-Modell. Dabei werden Regler-Parameter bestimmt, bei denen die Soll-Temperaturen der Heiz-Bänder möglichst schnell ohne starke Überschwinger erreicht werden. Dies lässt sich beispielsweise mit der Zielfunktion: $costFunction = a * \left(t_stabil\right) + b * \left(Überschwingen_max\right) - > min$ erreichen, wobei a und b Gewichte mit 0<=a,b<=1 und a+b=1 sind, t_stabil die Zeit, bis ein stabiler Zustand erreicht ist, und Überschwingen_max die Überschwingungsstärke darstellen.

Die Optimierung kann dabei mittels herkömmlicher Methoden zur Temperatur-Regler-Optimierung erfolgen wie beispielsweise dem Verfahren nach Ziegler und Nichols, dem Verfahren nach Chien Hrones Reswick oder einer Empirischen Optimierung.

Zur Optimierung der Regler-Parameter können anstelle der traditionellen Optimierungsverfahren statistische Verfahren wie Reinforcement Learning und Bayesianische Optimierung oder Methoden aus der klassischen mathematischen Optimierung wie das Nelder-Mead-Verfahren verwendet werden.

Die Laufzeit zur Bestimmung der Temperaturen im stabilen Zustand reduziert sich somit von mehreren Minuten herunter auf wenige Millisekunden. Die Optimierung erfolgt nach den gleichen Methoden wie die traditionelle Optimierung eines Reglers. Nun wird jedoch in jedem Iterationsschritt das Temper-Modell ausgewertet. Damit entfallen zusätzliche Kosten, die im Rahmen der herkömmlichen Optimierung eines Extrudier-Prozesses entstehen würden, wie beispielweise Kosten beim Laufenlassen des Extrudierens, Kosten für Messungen während des Laufenlassens des Extrudierens oder Kosten für notwendige Optimierungen. So werden nicht nur Zeit, sondern auch Ausschuss-Kosten gespart.

In einer Variante des Ausführungs-Beispiels wird das Temper-Modell im Rahmen eines Nach-Trainierens verallgemeinert. Dafür werden dem Temper-Modell Parameter des Kunststoff-Granulats mitgegeben. Wird das Temper-Modell dann mit verschiedenen Granulat-Chargen trainiert, so kann ein allgemein gültiges Temper-Modell für verschiedene Granulat-Chargen erstellt werden. Ein erneutes Optimieren der Regler bei der Nutzung einer weiteren Granulat-Charge fällt dann weg. Zudem wird das Modell robuster gegenüber Prozess-Schwankungen.

In der Realität wird es jedoch immer wieder Prozess-Schwankungen wie beispielsweise geänderte Kunststoff-Granulate mit neuen Eigenschaften geben, zu denen während der Trainingsphase noch keine Daten vorhanden sind. In einem solchen Fall wird gemäß einer weiteren Variante des Ausführungs-Beispiels das Temper-Modell ohne Neutraining adaptiert. Dazu wird während der Trainingsphase das gesamte Temper-Modell mit den vorhandenen Trainings-Daten trainiert. Ändern sich Eingabe-Parameter im Vergleich zu den Trainings-Daten, werden vortrainierte Gewichte des Temper-Modells festgehalten und zusätzliche Gewichte eingeführt. Es werden dann lediglich die zusätzlichen Gewichte trainiert.

Im Weiteren wird für das verwendete Temper-Modell eine Sensitivitätsanalyse durchgeführt. Dabei wird bestimmt, welche Eingangs-Daten des Temper-Modells einen besonderen Einfluss auf Ausgangs-Daten des Temper-Modells haben.

Bei der Sensitivitätsanalyse wird basierend auf einem bereits trainierten neuronalen Netzwerk für das Temper-Modell ein kleiner Stör-Term auf die Ausgangs-Daten des Temper-Modells addiert und der sich dadurch ergebende Fehler anschließend zurück zu den Eingangs-Daten des Temper-Modells propagiert. Eingangs-Daten mit großen Änderungen sind stark sensitiv, d.h. sie spielen eine wichtige Rolle für die Ausgabe-Daten des Temper-Modells.

Hierdurch ist es möglich, diejenigen Eingangs-Größen zu identifizieren, die relevante Qualitätstreiber sind. Zum Beispiel könnte hierdurch als Ergebnis herauskommen, dass ein bestimmtes Mischverhältnis des Kunststoffs die sensibelste Eingabegröße ist. Man erfährt also mehr Details über den zugrundeliegenden Prozess.

Mit Hilfe des Temper-Modells lässt sich beispielsweise bestimmen, welchen Anteil die Eigenschaften des Kunststoff-Granulats auf die Temperaturen besitzen und welchen Anteil der Extruder selbst hat. Diese Information kann anschließend verwendet werden, um den Optimierungsprozess besser zu lenken und damit zu beschleunigen, z.B. indem auf nicht- oder weniger relevante Eingabefeatures verzichtet wird.

## Patentansprüche

1. Temper-Vorrichtung (1) zum Tempern eines Temper-Guts (11), aufweisend
- mindestens eine Zustands-Erfassungs-Einheit (12) zum Erfassen eines Ist-Zustands des Temper-Guts und
- mindestens eine Steuer-Einheit (13) mit mindestens einem Steuer-Parameter zum Steuern des Temperns des Temper-Guts, wobei
- die Steuer-Einheit dazu ausgestaltet ist, dass auf der Grundlage des Ist-Zustands des Temper-Guts mit Hilfe eines Maschinen-Lern-Verfahrens ein Temper-Modell mit dem Steuer-Parameter gebildet und
- das Temper-Modell mit dem Steuer-Parameter zum Steuern des Temperns des Temper-Guts verwendet wird.

2. Temper-Vorrichtung nach Anspruch 1, wobei
- die Steuer-Einheit mindestens einen Temperatur-Regler zum Regeln einer Temperatur des Temper-Guts aufweist und
- der Steuer-Parameter von dem Temperatur-Regler gebildet ist.

3. Temper-Vorrichtung nach Anspruch 1 oder 2, wobei
- der Ist-Zustand des Temper-Guts mit Hilfe mindestens einer physikalischen oder chemischen Größe beschrieben werden kann und
- die Zustands-Erfassungs-Einrichtung mindestens einen physikalischen oder chemischen Sensor zum Erfassen der physikalischen oder chemischen Größe aufweist.

4. Temper-Vorrichtung nach Anspruch 3, wobei
- die physikalische Größe eine Temperatur des Temper-Guts ist und
- der physikalische Sensor einen Temperatur-Sensor zum Erfassen der Temperatur des Temper-Guts aufweist.

5. Temper-Vorrichtung nach Anspruch 3 oder 4, wobei
- die physikalische Größe eine Form des Temper-Guts ist und
- der physikalische Sensor einen Form-Sensor zum Erfassen der Form des Temper-Guts aufweist.

6. Temper-Verfahren zum Tempern eines Temper-Guts mit Hilfe einer Temper-Vorrichtung nach einem der Ansprüche 1 bis 5, wobei folgende Verfahrensschritte durchgeführt werden:
a) Erfassen (101) der Ist-Zustands-Größe des Temper-Guts mit Hilfe der Zustands-Erfassungs-Einheit,
b) Bilden (102) eines Temper-Modells mit dem Steuer-Parameter auf der Grundlage der erfassten Ist-Zustands-Größe und
c) Steuern (103) des Temperns des Temper-Guts mit Hilfe des Temper-Modells mit dem Steuer-Parameter, wobei zum Bilden des Temper-Modells folgende weitere Verfahrensschritte durchgeführt werden:
ba) Bereitstellen (1021) eines Ausgangs-Modells des Temper-Modells und
bb) Anwenden (1022) eines Maschinen-Lern-Verfahrens auf das Ausgangs-Modell unter Berücksichtigung der erfassten Zustands-Größe.

7. Verfahren nach Anspruch 6, wobei für die Steuer-Einheit ein Temperatur-Regler verwendet wird, der den Steuer-Parameter bildet.

8. Temper-Verfahren nach Anspruch 7, wobei für das Maschinen-Lern-Verfahren ein Kl-Modell verwendet wird.

9. Temper-Verfahren nach Anspruch 8, wobei für das Kl-Modell ein neuronales Netz verwendet wird.

10. Temper-Verfahren nach einem der Ansprüche 6 bis 9, wobei für das Maschinen-Lern-Verfahren Eingabe-Daten verwendet werden, die aus der Gruppe Zustands-Daten des Temper-Guts, Temper-Vorrichtungs-Daten der Temper-Vorrichtung und Umgebungs-Daten einer Umgebung der Temper-Vorrichtung ausgewählt sind.

11. Temper-Verfahren nach Anspruch 10, wobei die Temper-Vorrichtungs-Daten der Temper-Vorrichtung aus der Gruppe Real-Daten einer existierenden Temper-Vorrichtung und Simulations-Daten einer virtuellen Temper-Vorrichtung ausgewählt sind.

12. Temper-Verfahren nach einem der Ansprüche 6 bis 11, wobei das Temper-Verfahren, die Verfahrensschritte des Temper-Verfahrens und/oder die weiteren Verfahrensschritte des Temper-Verfahrens in einer Zeit von unter 120 min und insbesondere in einer Zeit von unter 60 min durchgeführt werden.

13. Temper-Verfahren nach Anspruch 12, wobei die Zeit unter 1 s und insbesondere unter 100 ms beträgt.

14. Temper-Verfahren nach einem der Ansprüche 6 bis 13, wobei
- als Temper-Gut mindestens ein thermoplastisches Kunststoff-Edukt verwendet wird und
- eine physikalische und/oder chemische Umwandlung des Kunststoff-Edukts in ein Kunststoff-Produkt durch das Tempern zumindest unterstützt wird.

15. Temper-Verfahren nach einem der Ansprüche 14, wobei für das Maschinen-Lern-Verfahren Eingangs-Daten verwendet werden, die aus der Gruppe Kunststoff-Edukt-Daten und/oder Kunststoff-Produkt-Daten ausgewählt sind.

16. Temper-Verfahren nach Anspruch 14 oder 15, wobei während und/oder nach dem chemischen und/oder physikalischen Umwandeln des Kunststoff-Edukts in das Kunststoff-Produkt mindestens ein aus der Gruppe Extrudieren, Spritzgießen und Blasformen ausgewähltes Kunststoff-Formgebungs-Verfahren angewendet wird.

17. Maschinen-Lern-Verfahren zum Bilden eines Temper-Modells, das für eine Temper-Vorrichtung nach einem der Ansprüche 1 bis 5 und/oder für ein Temper-Verfahren nach einem der Ansprüche 6 bis 16 verwendet werden kann.

18. Maschinen-Lern-Verfahren, wobei ein Einfluss der Eingangs-Daten des Maschinen-Lern-Verfahrens auf Ausgangs-Daten des Maschinen-Lern-Modells bestimmt wird.

19. Computer-Programm-Produkt zum Durchführen des Maschinen-Lern-Verfahrens nach Anspruch 17 oder 18.
